# EUROPÄISCHE PATENTSCHRIFT

(11) **EP 2 669 549 B1**
(45) Veröffentlichungstag und Bekanntmachung des Hinweises auf die Patenterteilung: **12.10.2016**
(21) Anmeldenummer: 13162590.7
(22) Anmeldetag: 05.04.2013
(51) Int. Cl.: F16H 15/20, B62M 11/12

(54) **Fahrradgetriebe**
Bicycle gears
Engrenage de bicyclette

(30) Priorität: 30.05.2012 DE 102012209096
(43) Veröffentlichungstag der Anmeldung: 04.12.2013
(73) Patentinhaber: ROBERT BOSCH GMBH, 70442 Stuttgart (DE)
(72) Erfinder: Zlindra, Martin, 71106 Magstadt (DE); Kimmich, Peter, 71144 Steinenbronn (DE); Braun, Sigmund, 72127 Kusterdingen (DE); Schumacher, Christoph, 72144 Dusslingen (DE)

(56) Entgegenhaltungen:
- WO-A2-2010/056090
- GB-A- 2 080 452
- NL-A- 9 101 200
- US-A- 5 597 056
- US-A1- 2001 024 993

## Beschreibung

### Stand der Technik

Die vorliegende Erfindung betrifft ein Fahrradgetriebe sowie ein Fahrrad mit dem entsprechenden Fahrradgetriebe.

Vorbekannte Fahrradgetriebe umfassen mehrere Kettenblätter, die wahlweise je nach gewünschter Übersetzung zum Antrieb des Hinterrades verwendet werden. Alternative Übersetzungsgetriebe sind direkt in der Nabe des Hinterrades angeordnet. Die erste Variante mit den mehreren Kettenblättern ist relativ großbauend, da insbesondere am Hinterrad eine Vielzahl an parallel angeordneten Kettenblättern benötigt wird. Die Nabenschaltung muss stets in den sehr begrenzten Bauraum der Nabe des Hinterrades eingebaut werden.

Den Stand der Technik nach dem Oberbegriff des Anspruchs 1 stellt hier den US 2001/024993 dar.

### Offenbarung der Erfindung

Die Erfindung betrifft einen Fahrradgetriebe gemäß dem Oberbegriff des Patentanspruchs 1.

Das Fahrradgetriebe mit den Merkmalen des Anspruchs 1 ermöglicht einen sehr kompakten, kostengünstigen und wartungsarmen Aufbau. Des Weiteren kann das erfindungsgemäße Fahrradgetriebe sehr gut mit einem elektrischen Antrieb oder Zusatzantrieb kombiniert werden. Die Positionierung des erfindungsgemäßen Fahrradgetriebes erfolgt bevorzugt an der Tretkurbelwelle. Somit kann eine gemeinsame Baugruppe aus Tretkurbelwelle, Elektromotor und Fahrradgetriebe gebildet werden. Des Weiteren ermöglich das Fahrradgetriebe eine stufenlos einstellbare Übersetzung. Die Wahl der Übersetzung kann dabei automatisch gesteuert werden. All diese Vorteile werden erreicht durch ein Fahrradgetriebe, umfassend eine zum Antrieb eines Fahrrades ausgebildete Abtriebswelle, ein drehfest auf der Abtriebswelle angeordnetes erstes Reibrad und ein vom Fahrer und/oder Motor antreibbares, koaxial zur Abtriebswelle gelagertes zweites Reibrad. Des Weiteren ist zumindest ein exzentrisch zur Abtriebswelle angeordneter, drehbar gelagerter Doppelkegel vorgesehen. Zur Drehmomentübertragung wälzen das erste Reibrad und das zweite Reibrad reibschlüssig auf dem Doppelkegel. Je nach Position und Ausgestaltung dieses Doppelkegels ist dabei die Übersetzung zwischen dem ersten und dem zweiten Reibrad einstellbar.

Des Weiteren ist vorgesehen, dass das erste Reibrad eine drehfest auf der Abtriebswelle angeordnete Druckschale und eine drehfest mit der Druckschale verbundene Reibschale umfasst. Die Reibschale ist dabei gegenüber der Druckschale in Längsrichtung der Abtriebswelle verschiebbar angeordnet. Die Reibschale wälzt reibschlüssig auf dem Doppelkegel.

Die Unteransprüche zeigen bevorzugte Weiterbildungen der Erfindung. Bevorzugt ist vorgesehen, dass der Doppelkegel einen ersten Kegel und einen mit dem ersten Kegel steif verbundenen zweiten Kegel umfasst. Dabei sind die Grundflächen der beiden Kegel einander zugewandt. Das erste Reibrad wälzt auf dem ersten Kegel und das zweite Reibrad wälzt auf dem zweiten Kegel. Besonders bevorzugt ist der Doppelkegel verschiebbar angeordnet. Durch Verschieben des Doppelkegels verändert sich die Übersetzung zwischen dem ersten Reibrad und dem zweiten Reibrad.

Das zweite Reibrad ist besonders bevorzugt als Hohlrad ausgebildet. Dadurch ist ein kompakter Aufbau des Fahrradgetriebes möglich.

Besonders bevorzugt ist die Druckschale in Richtung der Reibschale federbelastet, insbesondere mittels einer Tellerfeder. Des Weiteren ist bevorzugt vorgesehen, dass formschlüssige Übertragungsflächen zwischen der Reibschale und der Druckschale so ausgeformt sind, dass sich bei steigendem Drehmoment ein Abstand zwischen der Reibschale und der Druckschale erhöht und sich somit eine Anpresskraft der Reibschale auf den Doppelkegel erhöht. Insbesondere wird dies dadurch erreicht, dass an der Reibschale eine erste Übertragungsfläche und an der Druckschale eine flächig auf der ersten Übertragungsfläche aufliegende zweite Übertragungsfläche ausgebildet sind. Die beiden Übertragungsflächen weisen gegenüber der Längsachse der Abtriebswelle einen Winkel größer 0° und kleiner 90° auf. Insbesondere liegt der Winkel zwischen 50° und 89°. Die Ausgestaltung dieser Übertragungsflächen führt dazu, dass bei steigendem Drehmoment die Druckschale die Reibschale in Längsrichtung der Abtriebswelle wegdrückt. Dabei erhöht sich die Anpresskraft zwischen der Reibschale und dem Doppelkegel. Diese Ausbildung des ersten Reibrades kann auch als "Momentensteller" bezeichnet werden. Dieser Momentensteller übernimmt die Funktion, bei steigendem Eingangsmoment in das Fahrradgetriebe die Anpresskräfte auf den Doppelkegel so zu erhöhen, dass die Reibschlüsse eine vollständige Übertragung zulassen. Die Verbindung zwischen Druckschale und Reibschale mit den geneigten Übertragungsflächen wird auch als tangential formschlüssige Verbindung bezeichnet.

Des Weiteren umfasst das Fahrradgetriebe bevorzugt einen Kegelträger. In diesem Kegelträger sind mehrere der Doppelkegel exzentrisch zur Abtriebswelle drehbar gelagert. Dieser Kegelträger ist bevorzugt koaxial zur Abtriebswelle angeordnet und ist in Längsrichtung der Abtriebswelle verschiebbar. Dadurch kann die Übersetzung zwischen dem ersten Reibrad und dem zweiten Reibrad verändert werden. Der Kegelträger dreht sich dabei nicht mit der Abtriebswelle mit. Indem die Doppelkegel relativ zum ersten Reibrad und zum zweiten Reibrad verschoben werden, ändert sich der Radius der Reibkontaktpunkte an den Kegelflächen und somit die Übersetzung. Für das Verschieben des Kegelträgers sorgt bevorzugt eine Verstellhülse, die durch ein Gewinde beim Drehen um ihre eigene Achse eine in Axialrichtung der Abtriebswelle gerichtete Verstellkraft erzeugt. Die Lagerung geschieht zum einen über einen als Loslager eingesetzten Nadelkranz, der zwischen der Abtriebswelle und der Verstellhülse sitzt, und zum anderen über ein fest eingebautes Wälzlager, insbesondere Rillenkugellager. Der Einbau dieses Wälzlagers erfolgt über einen Gehäusedeckel und einen Sicherungsring von außen.

Bevorzugt sind die Doppelkegel, das erste Reibrad und das zweite Reibrad fluiddicht in einem Gehäuse des Fahrradgetriebes eingeschlossen. Der Innenraum dieses Gehäuses kann mit einem Traktionsfluid befüllt werden. Die entsprechenden Öffnungen nach außen werden abgedichtet.

Die Erfindung umfasst des Weiteren ein Fahrrad mit einem soeben beschriebenen Fahrradgetriebe und einer von einem Fahrer und/oder Motor angetriebene Tretkurbelwelle. Die Tretkurbelwelle ist dabei zum Antrieb des zweiten Reibrades des Fahrradgetriebes angeordnet. Die im Rahmen des erfindungsgemäßen Fahrradgetriebes beschriebenen vorteilhaften Ausgestaltungen finden entsprechend vorteilhafte Anwendung auf das erfindungsgemäße Fahrrad.

Insbesondere ist ein koaxial zur Tretkurbelwelle gelagertes Übertragungselement, insbesondere ein Kettenblatt, vorgesehen, das zum Antrieb des Hinterrades dient. Die Abtriebswelle des Fahrradgetriebes ist zum Antrieb dieses Übertragungselementes angeordnet.

Bevorzugt umfasst das Fahrrad einen Elektromotor, der zum Antrieb des zweiten Reibrades angeordnet ist. Dieser Elektromotor dient insbesondere als Hilfs- oder Zusatzantrieb. Deshalb umfasst das Fahrrad bevorzugt ein Summierungsgetriebe, in dem das Drehmoment des Elektromotors und das Drehmoment des Fahrers zum Antrieb des zweiten Reibrades summierbar sind.

Bevorzugt sind die drei Kernkomponenten Elektromotor, Summierungsgetriebe und Fahrradgetriebe radial um die zentrale Tretwelle herum verteilt. Das Summierungsgetriebe sitzt insbesondere koaxial auf der Tretkurbelwelle. Der Kraftfluss verläuft von der Tretkurbelwelle über das Summierungsgetriebe in das Fahrradgetriebe und von dort aus auf das Übertragungselement, insbesondere Kettenblatt. Bei Verwendung des zusätzlichen Elektromotors verläuft der Kraftfluss vom Elektromotor auf das Summierungsgetriebe und von dort auf das Fahrradgetriebe. Der Kraftfluss im Gesamtsystem teilt sich zunächst in die zwei Quellen: Fahrer und Elektromotor auf. Die beiden Stränge vereinen sich unmittelbar vor dem Eintritt in das Fahrradgetriebe und wirken somit anschließend auch gemeinsam auf das Übertragungselement, insbesondere Kettenblatt.

Für eine sehr kompakte Anordnung mit möglichst großer Bodenfreiheit ist vorgesehen, dass die Längsachse der Abtriebswelle des Fahrradgetriebes unter einer horizontalen Ebene angeordnet ist. Diese horizontale Ebene liegt in der Tretkurbelwelle. Des Weiteren ist besonders bevorzugt eine Längsachse der Ankerwelle des Elektromotors über dieser horizontalen Ebene angeordnet. Die Positionierung der einzelnen Komponenten ist so gewählt, dass sich ein Maximum an Bodenfreiheit bietet. Dabei bildet das Fahrradgetriebe den untersten Punkt der gesamten Antriebsanordnung und bestimmt somit den Abstand zum Boden. So kann bei dem Fahrrad zwischen der Version mit und der Version ohne Fahrradgetriebe die Bodenfreiheit entsprechend angepasst werden. Dies entspricht auch der bevorzugten Anwendung des erfindungsgemäßen Fahrrads, da das erfindungsgemäße Fahrradgetriebe vornehmlich für komfortorientierte Fahrräder gedacht ist, während ein Fahrrad ohne das erfindungsgemäße Fahrradgetriebe bevorzugt für den sportlichen Einsatz verwendet wird.

### Kurze Beschreibung der Zeichnungen

Nachfolgend wird ein Ausführungsbeispiel der Erfindung unter Bezugnahme auf die begleitende Zeichnung im Detail beschrieben. Dabei zeigt:
- Figur 1: ein erfindungsgemäßes Fahrradgetriebe gemäß einem Ausführungsbeispiel,
- Figur 2: das erfindungsgemäße Fahrradgetriebe gemäß dem Ausführungsbeispiel mit eingezeichneten Drehrichtungen,
- Figur 3: das erfindungsgemäße Fahrradgetriebe gemäß dem Ausführungsbeispiel in Stellung mit maximaler Untersetzung,
- Figur 4: das erfindungsgemäße Fahrrad gemäß dem Ausführungsbeispiel in Stellung mit maximaler Übersetzung,
- Figur 5: ein erstes Reibrad des erfindungsgemäßen Fahrradgetriebes gemäß dem Ausführungsbeispiel,
- Figur 6: ein erfindungsgemäßes Fahrrad mit dem erfindungsgemäßen Fahrradgetriebe gemäß dem Ausführungsbeispiel,
- Figur 7: eine Detailansicht aus Figur 6, und
- Figur 8: eine Detailansicht der gesamten Antriebsvorrichtung des erfindungsgemäßen Fahrrades mit dem erfindungsgemäßen Fahrradgetriebe gemäß dem Ausführungsbeispiel.

### Ausführungsform der Erfindung

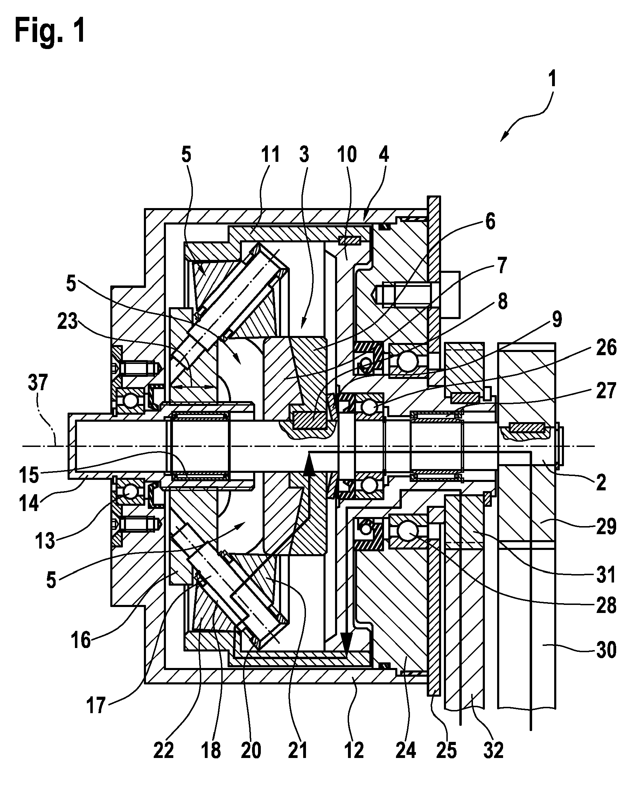

Figur 1 zeigt einen Schnitt durch das Fahrradgetriebe 1 gemäß dem Ausführungsbeispiel.

Das Fahrradgetriebe 1 umfasst eine Abtriebswelle 2. Auf dieser Abtriebswelle 2 ist ein erstes Reibrad 3 rotationsfest gelagert. Des Weiteren umfasst das Fahrradgetriebe ein zweites Reibrad 4 und mehrere Doppelkegel 5.

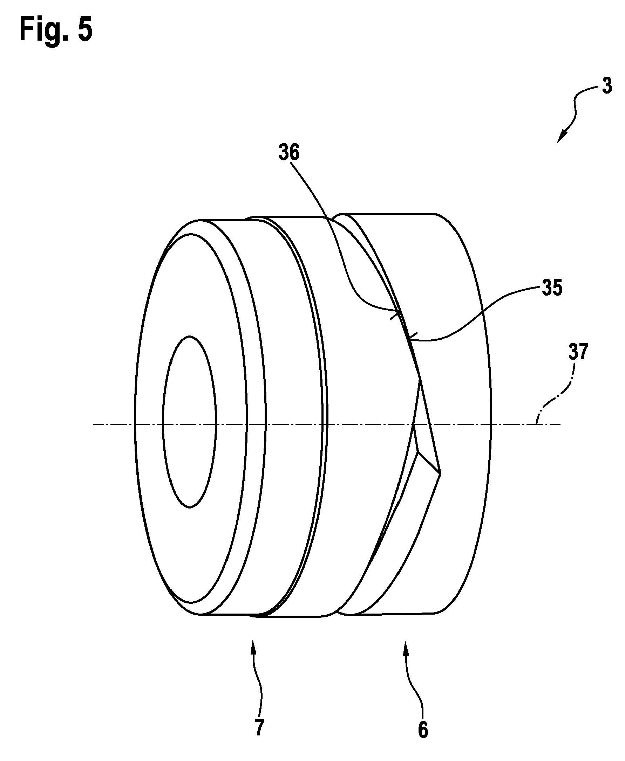

Das erste Reibrad 3 setzt sich zusammen aus einer Druckschale 6, einer Reibschale 7, einer Passfeder 8 und einer Tellerfeder 9. Die Druckschale 6 sitzt mittels der Passfeder 8 drehfest auf der Abtriebswelle 2. Die Reibschale 7 sitzt drehbar auf der Abtriebswelle 3 bzw. auf der Druckschale 6. Mittels der Tellerfeder 9 ist die Druckschale 6 in Richtung der Doppelkegel 5 federbelastet. Eine Mantelfläche der Reibschale 7 wälzt reibschlüssig auf den Doppelkegeln 5. Der genaue Aufbau des ersten Reibrades 3 wird anhand von Figur 5 erläutert.

Über das zweite Reibrad 4 wird ein Drehmoment in das Fahrradgetriebe 1 eingeleitet. Das zweite Reibrad 4 setzt sich zusammen aus einem Träger 10 und einem steif mit dem Träger 10 verbundenen Reibring 11. Durch die Ausbildung des Trägers 10 und des Reibrings 11 ist das zweite Reibrad 4 als Hohlrad ausgebildet. Eine nach innen gerichtete Fläche des Reibringes 11 wälzt reibschlüssig auf den Doppelkegeln 5.

Die Doppelkegel 5 sind auf einem Kegelträger 16 angeordnet. Dieser Kegelträger 16 ist koaxial zur Abtriebswelle 2 angeordnet. In diesem Kegelträger 16 sind mehrere Kegelachsen 17 mit einem Winkel kleiner 90° und größer 0° gegenüber der Abtriebswelle 2 angeordnet. Auf diesen Kegelachsen 17 ist jeweils ein Doppelkegel 5 drehbar gelagert. Hierzu befindet sich zwischen Doppelkegel 5 und Kegelachse 17 jeweils ein erstes Wälzlager 18.

Die einzelnen Doppelkegel 5 setzen sich jeweils zusammen aus einem ersten Kegel 21 und einem zweiten Kegel 22. Die beiden Kegel 21, 22 sind dabei steif miteinander verbunden. Die Außenseiten der jeweiligen Kegelachsen 17 sind mittels eines Käfigs 20 miteinander verbunden. Das erste Reibrad 3 wälzt auf dem ersten Kegel 21. Das zweite Reibrad 4 wälzt auf dem zweiten Kegel 22.

Der Kegelträger 16 mit den mehreren Doppelkegeln 5, das erste Reibrad 3 und das zweite Reibrad 4 sind in einem Gehäuse fluiddicht eingeschlossen. Dieses Gehäuse umfasst eine Dichtungsglocke 12, welche über eine Gehäuseplatte 24 und einen Gehäusedeckel 25 verschlossen ist. In dem Gehäuse befindet sich ein Traktionsfluid zur Verbesserung der Reibung zwischen den Doppelkegeln 5 und den Reibrädern 3, 4.

In der Dichtungsglocke 12 ist über ein zweites Wälzlager 13 eine Verstellhülse 14 drehbar gelagert. Die Verstellhülse 14 ist koaxial zur Abtriebswelle 2 angeordnet. Des Weiteren ist die Abtriebswelle 2 über ein drittes Wälzlager 15 gegenüber der Verstellhülse 14 gelagert. Die Verstellhülse 14 ragt aus der Dichtungsglocke 12 hinaus. Dadurch ist die Verstellhülse 14 von außen verstellbar, insbesondere verdrehbar. Der Kegelträger 16 sitzt auf der Verstellhülse 14. Zwischen dem Kegelträger 16 und der Verstellhülse 14 ist ein Gewinde ausgebildet. Dadurch kann durch Verdrehen der Verstellhülse 14 der Kegelträger 16 in Längsrichtung der Abtriebswelle verschoben werden. In Figur 1 ist mit Bezugszeichen 23 die Kegelträgerverschieberichtung eingezeichnet. Je nach Position des Kegelträgers 16 verändert sich auch die Position der Doppelkegel 5. Dadurch wird die Übersetzung zwischen den Reibrädern 3, 4 eingestellt.

Das zweite Reibrad 4, insbesondere der Träger 10, ist über ein viertes Wälzlager 26 und ein fünftes Wälzlager 27 gegenüber der Abtriebswelle 2 gelagert. Die Abtriebswelle 2 erstreckt sich hierbei durch den Träger 10 hindurch. Auf der Außenseite ist der Träger 10 über ein sechstes Wälzlager 28 gegenüber dem Gehäuse, insbesondere der Gehäuseplatte 24, gelagert.

Auf der Abtriebswelle 2 ist ein drehfestes Abtriebsrad 29 angeordnet. Der Abtrieb aus dem Fahrradgetriebe 1 erfolgt über dieses Abtriebsrad 29 und einen Riemen oder eine Kette 30 auf dem Abtriebsrad 29.

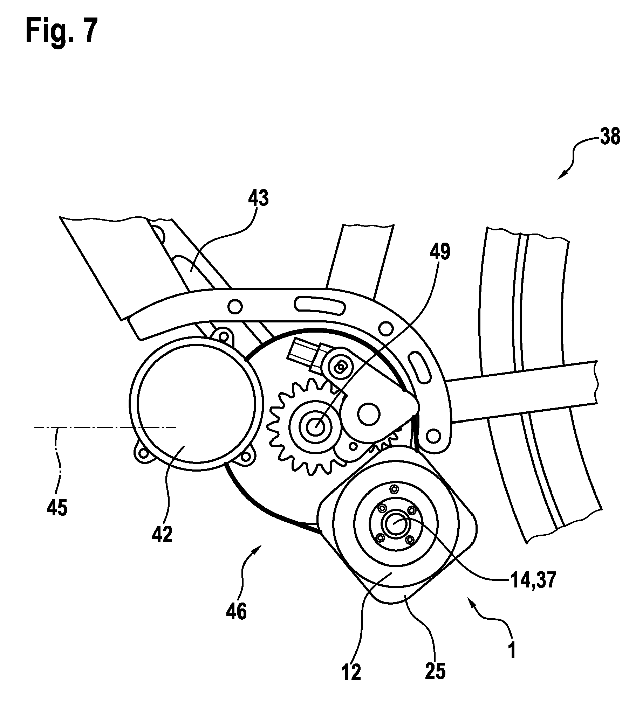

Auf dem zweiten Reibrad 4, insbesondere dem Träger 10, ist ein Antriebsrad 31 rotationsfest angeordnet. Dieses Antriebsrad 31 ist insbesondere als Zahnrad ausgebildet und steht im Eingriff mit einem Summierrad 32 eines Summengetriebes 46 (siehe Figur 7).

Mit dem abgewinkelten roten Pfeil ist der Kraftverlauf im Fahrradgetriebe 1 eingezeichnet. Das Moment wird über das Antriebsrad 31 auf den Träger 10 und den Reibring 11 eingeleitet. Der Reibring 11 wälzt auf den Doppelkegeln 5. Dadurch werden die Doppelkegel 5 in Rotation versetzt. Die Doppelkegel 5 wälzen auf dem ersten Reibrad 3. Über das erste Reibrad 3 wird das Drehmoment auf die Abtriebswelle 2 und somit auf das Abtriebsrad 29 übertragen.

Insbesondere werden sechs Doppelkegel 5 im Fahrradegetriebe 1 angeordnet.

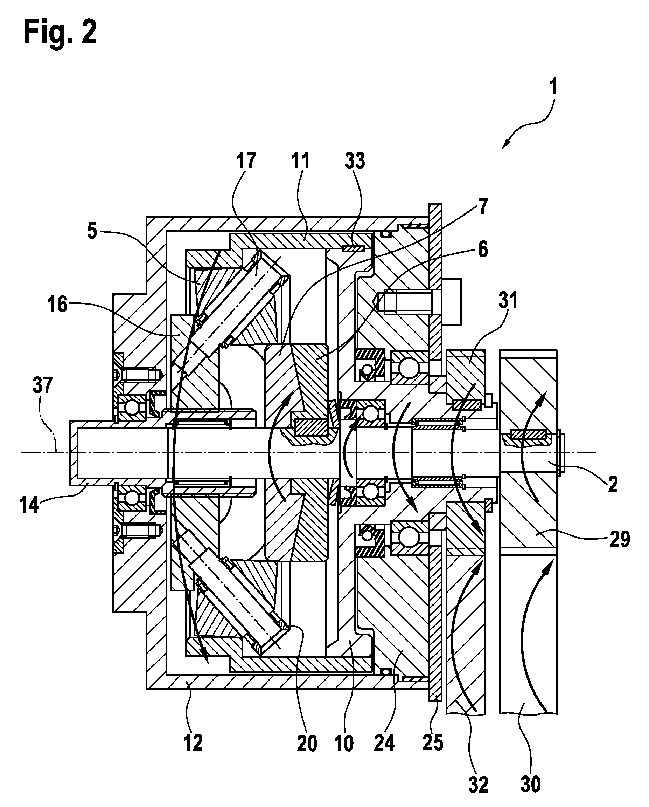

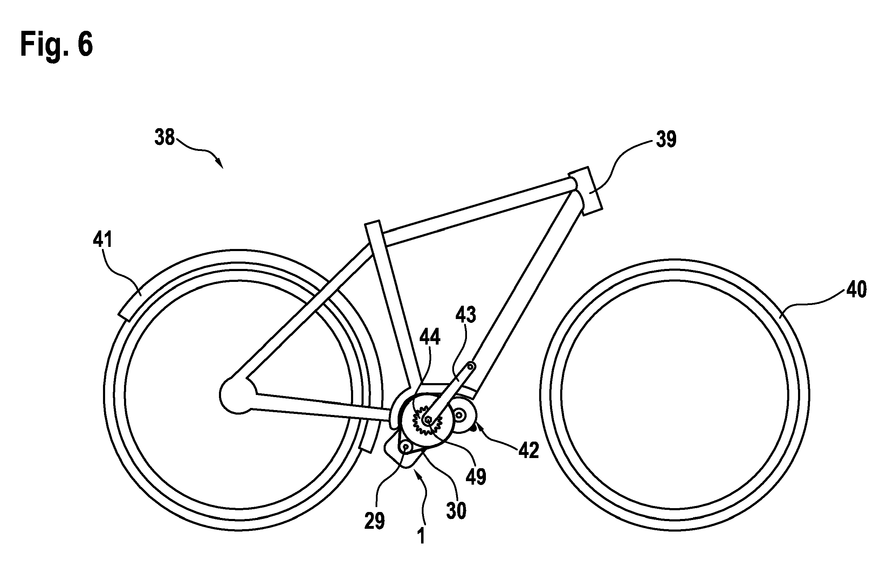

Figur 2 zeigt die Drehrichtungen innerhalb des Fahrradgetriebes 1. Bei Verwendung des Fahrradgetriebes in einem Fahrrad erfolgt bevorzugt eine Kopplung des Kettenblattes 44 (siehe Figur 6) durch einen Freilauf. Dadurch wird das Fahrradgetriebe 1 beim Rückwärtspedalieren nicht bewegt. So entstehen nur die in Figur 2 eingezeichneten Drehbewegungen der einzelnen Komponenten. Um ein Abdrehen des Reibringes 11 vom Träger 10 zu verhindern, sind der Träger 10 und der Reibring 11 über ein Linksgewinde miteinander verschraubt.

Des Weiteren ist in den Figuren 1 und 2 zu sehen, dass die äußeren Enden der Kegelachsen 17 mittels eines umlaufenden Käfigs 20 miteinander verbunden sind.

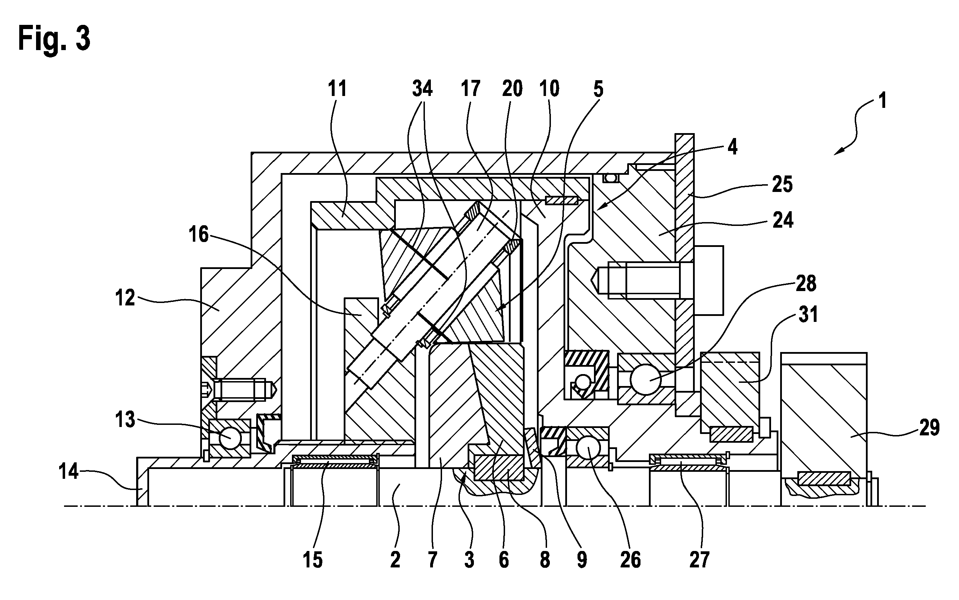

Figur 3 zeigt eine Position der Doppelkegel 5 und somit auch des Kegelträgers 16 für eine maximale Untersetzung zwischen dem zweiten Reibrad 4 und dem ersten Reibrad 3. Mit schwarzen Balken sind die entsprechenden imaginären Hebel 34 zwischen den Doppelkegeln 5 und dem ersten bzw. zweiten Reibrad 3, 4 eingezeichnet. Die Hebel 34 sind bestimmt durch die Kontaktpunkte entlang der Mantelfläche der Doppelkegel 5 bezüglich der Kegelachsen 17.

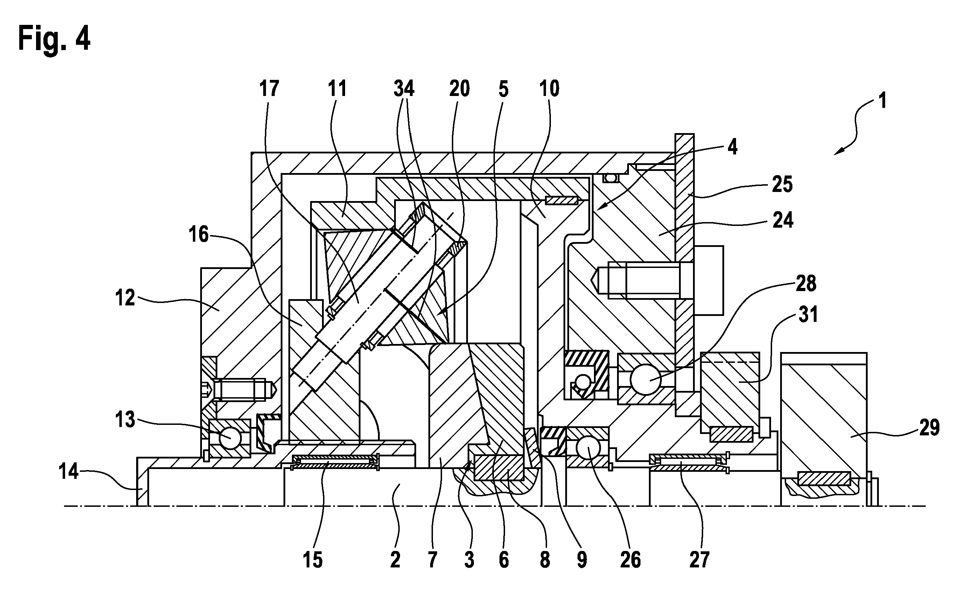

Figur 4 zeigt die Doppelkegel 5 und den Kegelträger 16 in einer Stellung für eine maximale Übersetzung. Hier sind wieder die entsprechenden Hebel 24 eingezeichnet. Zwischen der maximalen Untersetzung gemäß Figur 3 und der maximalen Übersetzung gemäß Figur 4 erfolgt eine absolut stufenlose Verstellung der Übersetzung durch Verschieben des Kegelträgers 16.

Figur 5 zeigt im Detail das erste Reibrad 3. Gezeigt ist hier die Druckschale 6 und die Reibschale 7. Des Weiteren ist die Mittel- bzw. Längsachse 37 der Abtriebswelle 2 eingezeichnet. An der Reibschale 7 ist eine erste Übertragungsfläche 35 ausgebildet. An der Druckschale 6 ist eine zweite Übertragungsfläche 36 ausgebildet. Die beiden Übertragungsflächen 35, 36 liegen aneinander an und sind gegenüber der Längsachse 37 um einen Winkel größer 0° und kleiner 90° geneigt. Wie oben bereits beschrieben, ist die Druckschale 6 drehfest mit der Abtriebswelle 2 verbunden. Die Reibschale 7 kann gegenüber der Abtriebswelle 2 verdreht werden. Auf der Reibschale 7 wälzen die Doppelkegel 5. Bei steigendem Eingangsdrehmoment in das Getriebe 1 verdreht sich die Reibschale 7 stärker gegenüber der Druckschale 6. Dadurch erhöht sich die Anpresskraft zwischen Reibschale 7 und Doppelkegeln 5. Gleichzeitig erfolgt aber ein sicheres Übertragen des Drehmomentes zwischen Reibschale 7 und Druckschale 6 durch die Ausbildung der geneigten Übertragungsflächen 35, 36. Diese Ausbildung des ersten Reibrades 3 wird auch als Momentensteller bezeichnet. Die Übertragungsflächen 35, 36 sind V-förmige schiefe Flächen.

Figur 6 zeigt ein Fahrrad 38 mit dem Fahrradgetriebe 1. Das Fahrrad 38 umfasst einen Rahmen 39, ein Vorderrad 40 und ein Hinterrad 41. Des Weiteren ist ein Elektromotor 42 vorgesehen. Der Fahrer kann das Drehmoment über zwei Tretkurbeln 43 (nur eine Tretkurbel ist dargestellt) auf eine Tretkurbelwelle 49 einleiten. Das Drehmoment aus dem Elektromotor 42 und das vom Fahrer eingeleitete Drehmoment wird über ein Kettenblatt 44 (Übertragungselement) und eine nicht dargestellte Kette auf das Hinterrade 41 übertragen.

Figur 7 zeigt ein Detail aus Figur 6. Dabei ist das Fahrrad 38 von der anderen Seite dargestellt. Zu sehen ist die Tretkurbelwelle 49. Auf dieser Tretkurbelwelle 49 ist ein Summierungsgetriebe 46 angeordnet. In diesem Summierungsgetriebe 46 werden die Drehmomente vom Elektromotor 42 und vom Fahrer summiert und in das Fahrradgetriebe 1 eingeleitet.

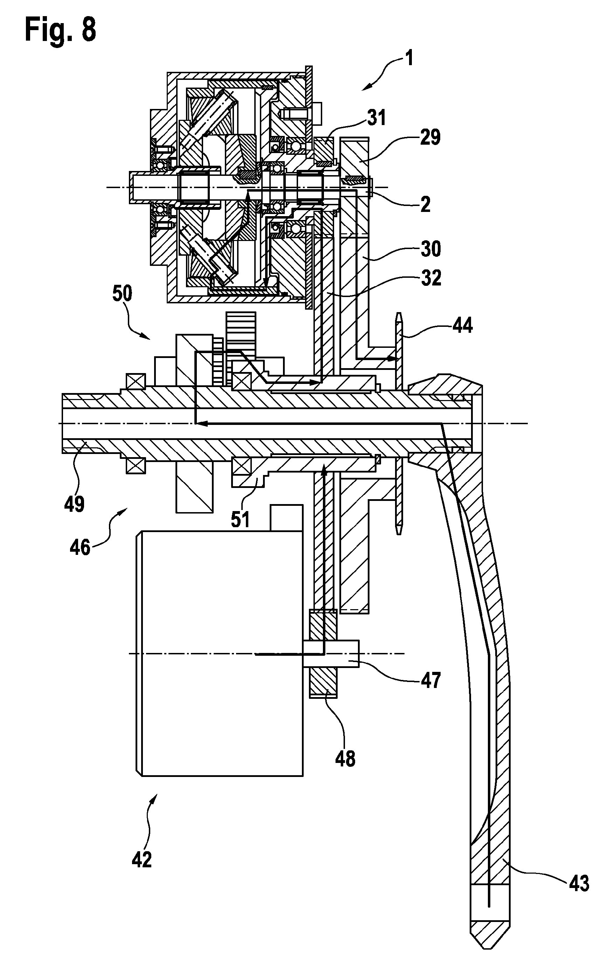

Des Weiteren ist in Figur 7 eine horizontale Ebene 45 eingezeichnet. Diese horizontale Ebene 45 liegt in der Tretkurbelwelle 49. Bevorzugt liegt eine Ankerwelle 47 (Figur 8) des Elektromotors 42 über dieser horizontalen Ebene 45. Die Abtriebswelle 2, insbesondere die Längsachse 37, des Fahrradgetriebes 1 liegt bevorzugt unter dieser horizontalen Ebene 45.

Figur 8 zeigt eine Schnittansicht durch einen Teil des Fahrrades 38 mit Elektromotor 42, Tretkurbelwelle 49, Summierungsgetriebe 46 und Fahrradgetriebe 1. Der Elektromotor 42 weist eine Ankerwelle 47 auf.

Auf dieser Ankerwelle 47 sitzt ein Ritzel 48. Das Ritzel 48 steht im Eingriff mit dem Summierrad 32. Des Weiteren ist auf der Tretkurbelwelle 49 das Kettenblatt 44 koaxial angeordnet. Auf dieses Kettenblatt 44 wird das Drehmoment vom Abtriebsrad 29 über den Riemen oder Kettentrieb 30 übertragen.

Das Summierungsgetriebe 46 umfasst eine auf der Tretkurbelwelle 49 angeordnete Hülse 51 und mehrere Zahnradstufen 50. Über diese Hülse 41 und die Zahnradstufen 50 wird das von den Tretkurbeln 43 und das vom Elektromotor 42 eingeleitete Drehmoment summiert und über das Summierrad 32 auf das Antriebsrad 31 des Fahrradgetriebes 1 übertragen.

Die Montage des Fahrradgetriebes 1 erfolgt dabei wie folgt:
1. Der Kegelträger 16 mit den Kegelachsen 17, den Doppelkegeln 5 und dem Käfig 20 wird als eine Einheit montiert.
2. Die Tellerfeder 9, die Passfeder 8, die Druckschale 6 und die Reibschale 7 werden von links (siehe Figur 1) auf die Abtriebswelle 2 aufgeschoben. Daraufhin wird der Kegelträger 16 auf die Abtriebswelle 2 aufgeschoben.
3. Das dritte Wälzlager 15 und die Verstellhülse 14 werden auf die Abtriebswelle 2 aufgeschraubt.
4. Von rechts (siehe Figur 1) wird der Träger 10 mit dem Reibring 11, dem vierten Wälzlager 26 und dem fünften Wälzlager 27 auf die Abtriebswelle 2 aufgeschoben.
5. Der Reibring 11 wird mit dem Träger 10 nach dem Einsetzen einer entsprechenden Dichtung zwischen der Gehäuseplatte 24 und dem Träger 10, verschraubt.
6. Daraufhin wird das sechste Wälzlager 28 eingesetzt und die entsprechenden Radialwellendichtungen sowie die Gehäuseplatte 24 montiert.
7. Auf die Gehäuseplatte 24 wird der Gehäusedeckel 25 aufgeschraubt. Ferner werden das Abtriebsrad 29 und das Antriebsrad 31 montiert.
8. Zwischen der Verstellhülse 14 und der Dichtungsglocke 12 wird eine Radialwellendichtung eingesetzt.
9. Die Dichtungsglocke 12 wird mit eingepressten Führungsstiften auf die Gehäuseplatte 24 aufgeschraubt.
10. Das zweite Wälzlager 13 wird eingesetzt und mit Sicherungsringen fixiert.
11. Das Abtriebsrad 29 und das Antriebsrad 31 werden mit einer Verkleidung abgedeckt.

Vorteil des erfindungsgemäßen Fahrradgetriebes 1 sowie des erfindungsgemäßen Fahrrads 38 ist, dass sich An- und Abtrieb auf derselben Seite des Getriebes befinden und so ein Anflanschen an bestehende Strukturen begünstigt wird. Die dem An-/Abtrieb abgewandte Seite bleibt frei für den Verstellmechanismus der Verstellhülse 14. Zum anderen wird die Anpresskraft der reibenden Elemente mittels der ersten Reibrades 3 sehr simpel und an einer zentralen Position drehmomentenabhängig erzeugt. Das Fahrradgetriebe 1 kann sehr gut in bestehende Konstruktionen für Elektrofahrräder integriert werden. Hierbei werden bereits bestehende Antriebsbauteile, beispielsweise das Summierrad 32, genutzt, um das Fahrradgetriebe 1 anzutreiben. Des Weiteren ist noch die stark erhöhte Drehzahl des Fahrradgetriebes 1 bezüglich der Tretkurbelwelle 49 und des Kettenblatts 44 zu erwähnen. Dies dient dem Minimieren der getriebeinternen Kräfte und des benötigten Bauraums.

## Patentansprüche

1. Fahrradgetriebe (1) umfassend
- eine zum Antrieb eines Fahrrades (38) ausgebildete Abtriebswelle (2),
- ein drehfest auf der Abtriebswelle (2) angeordnetes erstes Reibrad (3),
- ein vom Fahrer und/oder Motor antreibbares, koaxial zur Abtriebswelle (2) gelagertes zweites Reibrad (4), und
- zumindest einen exzentrisch zur Abtriebswelle (2) angeordneten, drehbar gelagerten Doppelkegel (5),
- wobei zur Drehmomentübertragung das erste Reibrad (3) und das zweite Reibrad (4) auf dem Doppelkegel (5) reibschlüssig wälzen,
**dadurch gekennzeichnet, dass**
das erste Reibrad (3) eine drehfest auf der Abtriebswelle (2) angeordnete Druckschale (6) und eine drehfest mit der Druckschale (6) verbundene Reibschale (7) umfasst, wobei die Reibschale (7) gegenüber der Druckschale (6) in Längsrichtung der Abtriebswelle (2) verschiebbar ist, und wobei die Reibschale (7) auf dem Doppelkegel (5) reibschlüssig wälzt.

2. Fahrradgetriebe nach Anspruch 1, **dadurch gekennzeichnet, dass** der Doppelkegel (5) einen ersten Kegel (21) und einen mit dem ersten Kegel (21) steif verbundenen zweiten Kegel (22) umfasst, wobei die Grundflächen der beiden Kegel (21, 22) einander zugewandt sind, und wobei das erste Reibrad (3) auf dem ersten Kegel (21) und das zweite Reibrad (4) auf dem zweiten Kegel (22) wälzt.

3. Fahrradgetriebe nach einem der vorhergehenden Ansprüche, **dadurch gekennzeichnet, dass** der Doppelkegel (5) verschiebbar ist, zur Veränderung der Übersetzung zwischen dem ersten Reibrad (3) und dem zweiten Reibrad (4).

4. Fahrradgetriebe nach einem der vorhergehenden Ansprüche, **dadurch gekennzeichnet, dass** das zweite Reibrad (4) als Hohlrad ausgebildet ist.

5. Fahrradgetriebe nach Anspruch 1, **dadurch gekennzeichnet, dass** formschlüssige Übertragungsflächen (35, 36) zwischen der Reibschale (7) und der Druckschale (6) so ausgeformt sind, dass sich bei steigendem Drehmoment ein Abstand zwischen der Reibschale (7) und der Druckschale (6) erhöht und sich somit eine Anpresskraft der Reibschale (7) auf den Doppelkegel (5) erhöht.

6. Fahrradgetriebe nach einem der Ansprüche 1 oder 5, **dadurch gekennzeichnet, dass** an der Reibschale (7) eine erste Übertragungsfläche (35) und an der Druckschale (6) eine flächig auf der ersten Übertragungsfläche (36) aufliegende zweite Übertragungsfläche ausgebildet sind, wobei die beiden Übertragungsflächen (35, 36) mit einem Winkel größer 0° und kleiner 90°, insbesondere zwischen 50° und 89°, zur Längsachse (37) der Abtriebswelle geneigt sind.

7. Fahrradgetriebe nach einem der vorhergehenden Ansprüche, **gekennzeichnet durch** mehrere exzentrisch zur Abtriebswelle (2) angeordnete, drehbar gelagerte Doppelkegel (5) und einen Kegelträger (16), in dem die Doppelkegel (5) drehbar gelagert sind.

8. Fahrradgetriebe nach Anspruch 7, **dadurch gekennzeichnet, dass** der Kegelträger (16) koaxial zur Abtriebswelle (2) gelagert ist und in Längsrichtung der Abtriebswelle (2) verschiebbar ist, zur Veränderung der Übersetzung zwischen dem ersten Reibrad (3) und dem zweiten Reibrad (4).

9. Fahrrad (38), umfassend
- ein Fahrradgetriebe (1) nach einem der vorhergehenden Ansprüche, und
- eine von einem Fahrer und/oder Motor angetriebene Tretkurbelwelle (49),
- wobei die Tretkurbelwelle (49) zum Antrieb des zweiten Reibrades (4) angeordnet ist.

10. Fahrrad nach Anspruch 9, **gekennzeichnet durch** ein koaxial zur Tretkurbelwelle (49) gelagertes Übertragungselement (44), insbesondere ein Kettenblatt, wobei die Abtriebswelle (2) zum Antrieb des Übertragungselementes (44) angeordnet ist.

11. Fahrrad nach einem der Ansprüche 9 oder 10, **gekennzeichnet durch** einen Elektromotor (42), der zum Antrieb des zweiten Reibrades (4) angeordnet ist.

12. Fahrrad nach Anspruch 11, **gekennzeichnet durch** ein Summierungsgetriebe (46), in dem das Drehmoment des Elektromotors (42) und des Fahrers zum Antrieb des zweiten Reibrades (4) summierbar sind.

13. Fahrrad nach einem der Ansprüche 9 bis 12, **dadurch gekennzeichnet, dass** die Längsachse (37) der Abtriebswelle (2) des Fahrradgetriebes (1) unter einer horizontalen Ebene (45), in der die Tretkurbelwelle (49) liegt, angeordnet ist, und insbesondere eine Längsachse der Ankerwelle (47) des Elektromotors (42) über dieser Ebene (45) angeordnet ist.

## Claims

1. Bicycle gear unit (1) comprising
- an output shaft (2) which is configured for driving a bicycle (38),
- a first friction wheel (3) which is arranged fixedly on the output shaft (2) so as to rotate with it,
- a second friction wheel (4) which can be driven by the rider and/or motor and is mounted coaxially with respect to the output shaft (2), and
- at least one rotatably mounted double cone (5) which is arranged eccentrically with respect to the output shaft (2),
- the first friction wheel (3) and the second friction wheel (4) rolling on the double cone (5) in a frictionally locking manner in order to transmit torque,
**characterized in that**
the first friction wheel (3) comprises a pressure shell (6) which is arranged fixedly on the output shaft (2) so as to rotate with it and a friction shell (7) which is connected fixedly to the pressure shell (6) so as to rotate with it, the friction shell (7) being displaceable in the longitudinal direction of the output shaft (2) with respect to the pressure shell (6), and the friction shell (7) rolling on the double cone (5) in a frictionally locking manner.

2. Bicycle gear unit according to Claim 1, **characterized in that** the double cone (5) comprises a first cone (21) and a second cone (22) which is connected rigidly to the first cone (21), the base faces of the two cones (21, 22) facing one another, and the first friction wheel (3) rolling on the first cone (21) and the second friction wheel (4) rolling on the second cone (22).

3. Bicycle gear unit according to either of the preceding claims, **characterized in that** the double cone (5) is displaceable, in order to change the transmission ratio between the first friction wheel (3) and the second friction wheel (4).

4. Bicycle gear unit according to one of the preceding claims, **characterized in that** the second friction wheel (4) is configured as a ring wheel.

5. Bicycle gear unit according to Claim 1, **characterized in that** positively locking transmission faces (35, 36) between the friction shell (7) and the pressure shell (6) are formed in such a way that, as the torque rises, the spacing between the friction shell (7) and the pressure shell (6) increases and therefore a pressing force of the friction shell (7) on the double cone (5) increases.

6. Bicycle gear unit according to either of Claims 1 and 5, **characterized in that** a first transmission face (35) is configured on the friction shell (7) and a second transmission face which lies on the first transmission face (36) over its full area is configured on the pressure shell (6), the two transmission faces (35, 36) being inclined with respect to the longitudinal axis (37) of the output shaft by an angle greater than 0° and less than 90°, in particular between 50° and 89°.

7. Bicycle gear unit according to one of the preceding claims, **characterized by** a plurality of rotatably mounted double cones (5) which are arranged eccentrically with respect to the output shaft (2), and a cone carrier (16), in which the double cones (5) are mounted rotatably.

8. Bicycle gear unit according to Claim 7, **characterized in that** the cone carrier (16) is mounted coaxially with respect to the output shaft (2) and can be displaced in the longitudinal direction of the output shaft (2), in order to change the transmission ratio between the first friction wheel (3) and the second friction wheel (4).

9. Bicycle (38), comprising
- a bicycle gear unit (1) according to one of the preceding claims, and
- a pedal crank shaft (49) which is driven by a rider and/or motor,
- the pedal crank shaft (49) being arranged for driving the second friction wheel (4).

10. Bicycle according to Claim 9, **characterized by** a transmission element (44), in particular a chain ring, which is mounted coaxially with respect to the pedal crank shaft (49), the output shaft (2) being arranged for driving the transmission element (44).

11. Bicycle according to either of Claims 9 and 10, **characterized by** an electric motor (42) which is arranged for driving the second friction wheel (4).

12. Bicycle according to Claim 11, **characterized by** a summing gear mechanism (46), in which the torque of the electric motor (42) and of the rider can be summed for driving the second friction wheel (4).

13. Bicycle according to one of Claims 9 to 12, **characterized in that** the longitudinal axis (37) of the output shaft (2) of. the bicycle gear unit (1) is arranged below a horizontal plane (45), in which the pedal crank shaft (49) lies, and, in particular, a longitudinal axis of the armature shaft (47) of the electric motor (42) is arranged above the said plane (45).

## Revendications

1. Engrenage de bicyclette (1), comprenant :
- un arbre de sortie (2) réalisé pour l'entraînement d'une bicyclette (38),
- une première roue de friction (3) disposée de manière solidaire en rotation sur l'arbre de sortie (2),
- une deuxième roue de friction (4) pouvant être entraînée par le conducteur et/ou par un moteur, supportée coaxialement par rapport à l'arbre de sortie (2), et
- au moins un double cône (5) supporté à rotation et disposé de manière excentrique par rapport à l'arbre de sortie (2),
- la première roue de friction (3) et la deuxième roue de friction (4) roulant avec engagement par friction sur le double cône (5) en vue du transfert de couple,
**caractérisé en ce que**
la première roue de friction (3) comprend une coque de pression (6) disposée de manière solidaire en rotation sur l'arbre de sortie (2) et une coque de friction (7) connectée de manière solidaire en rotation à la coque de pression (6), la coque de friction (7) pouvant être déplacée par rapport à la coque de pression (6) dans la direction longitudinale de l'arbre de sortie (2), et la coque de friction (7) roulant avec engagement par friction sur le double cône (5).

2. Engrenage de bicyclette selon la revendication 1, **caractérisé en ce que** le double cône (5) comprend un premier cône (21) et un deuxième cône (22) connecté rigidement au premier cône (21), les surfaces de base des deux cônes (21, 22) étant tournées l'une vers l'autre, et la première roue de friction (3) roulant sur le premier cône (21) et la deuxième roue de friction (4) roulant sur le deuxième cône (22).

3. Engrenage de bicyclette selon l'une quelconque des revendications précédentes, **caractérisé en ce que** le double cône (5) peut être déplacé pour modifier le rapport de transmission entre la première roue de friction (3) et la deuxième roue de friction (4).

4. Engrenage de bicyclette selon l'une quelconque des revendications précédentes, **caractérisé en ce que** la deuxième roue de friction (4) est réalisée sous forme de couronne dentée.

5. Engrenage de bicyclette selon la revendication 1, **caractérisé en ce que** les surfaces de transfert par engagement par correspondance de formes (35, 36) entre la coque de friction (7) et la coque de pression (6) sont formées de telle sorte que, dans le cas d'un couple croissant, une distance entre la coque de friction (7) et la coque de pression (6) augmente et par conséquent qu'une force de pression de la coque de friction (7) contre le double cône (5) augmente.

6. Engrenage de bicyclette selon l'une quelconque des revendications 1 ou 5, **caractérisé en ce qu'**une première surface de transmission (35) est réalisée sur la coque de friction (7) et une deuxième surface de transmission reposant à plat sur la première surface de transmission (36) est réalisée sur la coque de pression (6), les deux surfaces de transmission (35, 36) étant inclinées avec un angle supérieur à 0° et inférieur à 90°, en particulier compris entre 50° et 89°, par rapport à l'axe longitudinal (37) de l'arbre de sortie.

7. Engrenage de bicyclette selon l'une quelconque des revendications précédentes, **caractérisé par** plusieurs doubles cônes (5) supportés à rotation et disposés de manière excentrique par rapport à l'arbre de sortie (2) et un support de cône (16) dans lequel sont supportés à rotation les doubles cônes (5).

8. Engrenage de bicyclette selon la revendication 7, **caractérisé en ce que** le support de cône (16) est supporté coaxialement par rapport à l'arbre de sortie (2) et peut être déplacé dans la direction longitudinale de l'arbre de sortie (2) pour prolonger le rapport de transmission entre la première roue de friction (3) et la deuxième roue de friction (4).

9. Bicyclette (38), comprenant :
- un engrenage de bicyclette (1) selon l'une quelconque des revendications précédentes, et
- un arbre de manivelle de pédalier (49) entraîné par le conducteur et/ou par un moteur,
- l'arbre de manivelle de pédalier (49) étant prévu pour entraîner la deuxième roue de friction (4).

10. Bicyclette selon la revendication 9, **caractérisée par** un élément de transmission (44) supporté coaxialement par rapport à l'arbre de manivelle de pédalier (49), en particulier un plateau, l'arbre de sortie (2) étant prévu pour entraîner l'élément de transmission (44).

11. Bicyclette selon l'une quelconque des revendications 9 ou 10, **caractérisée par** un moteur électrique (42) qui est prévu pour entraîner la deuxième roue de friction (4).

12. Bicyclette selon la revendication 11, **caractérisée par** une transmission de sommation (46) dans laquelle le couple du moteur électrique (42) et du conducteur peuvent être additionnés pour entraîner la deuxième roue de friction (4).

13. Bicyclette selon l'une quelconque des revendications 9 à 12, **caractérisée en ce que** l'axe longitudinal (37) de l'arbre de sortie (2) de l'engrenage de bicyclette (1) est disposé sous un plan horizontal (45) dans lequel est situé l'arbre de manivelle de pédalier (49), et en particulier un axe longitudinal de l'arbre d'induit (47) du moteur électrique (42) est disposé au-dessus de ce plan (45).
